# EUROPÄISCHE PATENTSCHRIFT

(11) **EP 0 538 771 B1**
(45) Veröffentlichungstag und Bekanntmachung des Hinweises auf die Patenterteilung: **17.04.1996**
(21) Anmeldenummer: 92117866.1
(22) Anmeldetag: 19.10.1992
(51) Int. Cl.: F15B 5/00, G01B 13/12

(54) **Verfahren zur Diagnose des Verschleisses von bewegten Maschinenteilen**
Method for detecting wear in moving mechanical parts
Méthode pour détecter l'usure des pièces mécaniques mobiles

(30) Priorität: 19.10.1991 DE 4134589
(43) Veröffentlichungstag der Anmeldung: 28.04.1993
(73) Patentinhaber: NEUMAN & ESSER MASCHINENFABRIK, D-52531 Übach-Palenberg (DE)
(72) Erfinder: Nickol, Johannes, W-5133 Birgden (DE); Houba, Peter, W-5112 Baesweiler (DE)
(74) Vertreter: Fuchs, Luderschmidt & Partner Patentanwälte

(56) Entgegenhaltungen:
- EP-A- 0 145 190
- FR-A- 2 387 435
- US-A- 3 942 556
- US-A- 4 637 248

## Beschreibung

Die Erfindung betrifft ein Verfahren zur Diagnose des Verschleißes von bewegten Maschinenteilen mit gekrümmter Oberfläche und/oder Lagerelementen der bewegten Maschinenteile von Kurbel-Pleuelmechanismen mit Kreuzkopfführung, insbesondere von Kolbenstangen, Kolben- und Kolbenführungsringen, Kolbenstangenabdichtelementen und Tragsatteln bei Hubkolbenverdichtern. Die Erfindung betrifft auch eine Vorrichtung zur Diagnose des Verschleißes.

Aus der DE-OS 1773476 ist ein Verfahren und eine Vorrichtung zur pneumatischen Messung der Lage eines Meßobjektes bekannt, bei dem die ebene Oberfläche des Meßobjektes unter einem 45° Winkel aus zwei Speisekanälen angeblasen wird, so daß sich die Speiseströme im Bereich der Oberfläche des Meßobjektes schneiden. Im Bereich des Schnittpunktes ist ein Ausgangskanal angeordnet, der eine Änderung seiner Durchflußmenge und des Druckes erfaßt. Durch eine Lageveränderung bildet sich entweder ein Unter- oder ein Überdruck. Dieses Verfahren hat jedoch den Nachteil, daß die Kanäle in einem großen Abstand sowohl voneinander als auch von dem Meßobjekt angeordnet sind, so daß ein entsprechend großer Platzbedarf erforderlich ist, der z.B. bei der Messung von Kolbenstangen nicht zur Verfügung steht. Ein weiterer Nachteil besteht darin, daß runde, oszillierende Meßobjekte, wie z.B. Kolbenstangen, nicht vermessen werden können. Auf Grund der runden Oberfläche ist es weitaus schwieriger den Schnittpunkt der Speiseströme einzujustieren, wobei außerdem in Abhängigkeit von der Anordnung der Speisekanäle ein mehr oder weniger großer Anteil der Luftströme an der Kolbenstange vorbei strömt und für die Messung nicht zur Verfügung steht. Bei Änderung des Abstandes zur Düse auf Grund eines Verschleißes wären aufwendige Korrekturen erforderlich. Durch die oszillierende Bewegung wird kein konstantes Signal erhalten, bzw. ist das Signal durch die zwischen den weit beabstandeten Kanälen auftretende Wirbelbildung verfälscht.

Auf der EP 0 409 376 A2 ist ein Verfahren zum Erkennen von Oberflächendefekten an Kabeln bekannt. Die Oberfläche wird lediglich aus einem Kanal angeblasen, so daß ein Staudruck nicht erfaßt wird. Beim Auftreten einen Oberflächendefektes wird die sich ändernde ausströmende Gasmenge detektiert, so daß nur eine qualitative Messung möglich ist. Dieses Verfahren ist für exakte Abstandsmessungen und damit zur Messung des Verschleißes ungeeignet.

Aus der US 3,597,961 ist eine Vorrichtung bekannt, mit der das Verhandensein von Gegenständen detektiert wird. Durch mehrere Düsen strömt ein Fluid aus und bildet ein konisches Strömungsprofil, dessen Öffnungswinkel den Nachweisbereich definiert. Durch einen Sensorkanal wird der Staudruck erfaßt, der bei Überschreiten einer Druckschwelle eine Signal auslöst. Eine Verschleißmessung ist mit dieser Vorrichtung nicht möglich.

Die US 4,724,701 betrifft eine Vorrichtung, bei der der Luftstrom zentral zugeführt wird und der Unterdruck in den benachbarten Außenkanälen gemessen wird. Auch dieses Verfahren setzt eine ebene Oberfläche voraus. Einen Hinweis darauf, diese Verfahren zur Diagnose des Verschleißes an bewegten Maschinenteilen einzusetzen, ist aus diesem Stand der Technik nicht bekannt.

Aus der US 3,942,556 ist eine Düse als Bestandteil einer Nachweiseinrichtung bekannt, mit der lediglich qualitativ das Vorhandensein oder Nichtvorhandensein eines beliebig geformten Objektes nachgewiesen wird. Auf exakte Abstandsmessungen kommt es hierbei nicht an. Zur Verkürzung der Erholungszeiten wird eine speziell geformte Ringdüse vorgeschlagen, aus deren Ringkanal die Luft ausgeblasen wird. Wird ein Objekt an der Ringdüse vorbeigeführt, wird ein Teil der Luft umgelenkt und gelangt in einen vom Ringkanal umgebenen zentralen Kanal, wo die rückströmende Luft als Signal für das Vorhandensein des Objektes nachgewiesen wird. Ein Hinweis auf die Möglichkeit von Verschleißmessungen findet sich in dieser Schrift ebenfalls nicht.

Aus dem Stand der Technik sind jedoch Verfahren zur Überwachung des Verschleißes an Kolbenringen, Kolbenstangenabdichtelementen und Tragsatteln bekannt, bei denen mittels einer Schmelzmetallsicherung der Verschleiß festgestellt werden kann. Es werden auch sehr kostenintensive und komplizierte Sensoreinrichtungen, die durch induktives oder kapazitives Abtastverfahren oder initiierten Wirbelströmen mit nachgeordneten elektronischen Auswerteschaltungen ein dem Verschleißzustand äquivalentes Signal bilden, eingesetzt. Ebenso sind auch Einrichtungen bekannt, die den Verschleißweg mechanisch in eine Überwachungsgröße umsetzen.

Nachteilig bei den aus dem Stand der Technik bekannten Verfahren ist, daß gerade bei den induktiven und kapazitiven Abtastverfahren eine sehr hohe sensible Störanfälligkeit besonders durch Verschmutzung und Schwingungen gegeben ist. Diese Verfahren setzen außerdem voraus, daß die untersuchten Maschinenteile elektrisch leitende Materialien aufweisen. Dies führt dann in der Regel zu hohen Kosten derartiger Diagnoseverfahren und entsprechenen Einschränkungen. Bei mit nicht leitenden Materialien beschichteten Kolbenstangen können diese Verfahren nicht eingesetzt werden.

Es ist daher Aufgabe der Erfindung ein Verfahren und eine Vorrichtung zur Diagnose des Verschleißes von bewegten Maschinenteilen mit gekrümmter Oberfläche zu entwickeln, bei dem die Störanfälligkeit nahezu gänzlich ausgeschaltet werden kann, keine Einschränkungen bezüglich der Materialien bestehen und das von seiner Anwendung her kostensparend ist.

Diese Aufgabe wird dadurch gelöst, daß die Oberfläche des bewegten Maschinenteils in einem vorgegebenen an die Geschwindigkeit des bewegten Maschinenteils angepaßten Anfangsabstand s mit einem ringförmigen Gasstrom mit vorgegebenem an die Geschwindigkeit des bewegten Maschinenteils angepaßten Druck p_{A} im wesentlichen senkrecht angeblasen wird, daß die durch die Stauwirkung an der Oberfläche des bewegten Maschinenteils bewirkte Rückströmung des Gases erfaßt und der dabei auftretende Staudruck p_{R} kontinuierlich gemessen wird und daß der Druck p_{A} mit dem gemessenen Staudruck p_{R} unter Berücksichtigung des Anfangsabstandes s fortdauernd verglichen wird und aus dem Vergleich auf den Verschleiß geschlossen wird.

Kolbenstangen unterliegen in der Regel aufgrund ihres Materials einem geringeren Verschleiß als zum Beispiel die Abdichtelemente oder die Kolbenringe der Kolbenstangen. Ein Verschleiß dieser Bauteile äußert sich darin, daß die Kolbenstange ihre Lage senkrecht zur Bewegungsrichtung verändert. Dies bedeutet, daß sich auch der gemessene Staudruck verändert, so daß auf den Verschleiß dieser Bauteile geschlossen werden kann. Aufgrund dieses Verfahrens ist es möglich geworden, den Differenzdruck als ein Maß oder Signal für den Verschleiß an bewegten Maschinenteilen auszunutzen.

Der Einsatz eines gasförmigen Mediums zur Messung des Verschleisses bringt den Vorteil, daß die Messeinrichtung nicht direkt mit dem zu messenden Maschinenteil in Verbindung steht. Dadurch kann sich das Maschinenteil frei bewegen, ohne daß es zu einer Beeinträchtigung der oft komplizierten und sensiblen Meßeinrichtung kommt. Damit ergibt sich eine universelle Anwendbarkeit unabhängig vom Material der Kolbenstange und auch vom Betriebsmedium.

Da die kontinuierliche Messung durch die Bewegung des Maschinenteils nicht negativ beeinflußt werden soll, muß der Druck des Gasstromes unter Berücksichtigung des Abstandes entsprechend eingestellt sein. Nach einer besonderen Ausführungsform des Verfahrens wird die Oberfläche des Maschinenteils mit einem Überdruck von 0,05 bis 1 bar in einem Abstand s zwischen 0,1 und 3 mm angeblasen. Es ist damit möglich, den Verschleiß bewegter Maschinenteile zu messen, deren Geschwindigkeit bis zu 6m/sec betragen kann. Da der als Diagnoseparameter verwendete Staudruck P_{R} relativ gering ist, wird P_{R} vorzugsweise im Verhältnis 1:100 auf den sogenannten Signaldruck P_{Y} verstärkt. In diesem Fall wird unter Berücksichtigung der vorgenommenen Verstärkung P_{Y} mit P_{A} verglichen.

In vorteilhafter Weise wird die Oberfläche des bewegten Maschinenteils an mindestens zwei Stellen angeblasen, wobei diese so gewählt werden, daß ein in zwei Richtungen auftretender Verschleiß erfaßt wird.

In vorteilhafter Weise wird das Gas mit einem Systemeinheitsdruck p_{S} von 1,4 bar eingesetzt, der anschließend auf den Druck p_{A} gedrosselt wird.

Nach einer besonderen Ausführungsform des Verfahrens wird dabei als Gas neben Luft Stickstoff eingesetzt, wobei das nicht zurückströmende Gas gleichzeitig zur Spülung der die Kolbenstange umgebender Zwischenstücke benutzt wird.

Bei Hubkolbenverdichtern kann als Gas das vom Hubkolbenverdichter verdichtete Medium eingesetzt werden, wodurch eine zusätzliche Gasversorgungseinrichtung eingespart werden kann.

Vorrichtungsmäßig wird die Aufgabe dadurch gelöst, daß die Nachweiseinrichtung mindestens eine beabstandet zur gekrümmten Oberfläche des bewegten Maschinenteils angeordnete Düse mit einem ringförmigen Gasaustrittskanal aufweist, der von einem unter vorgegebenen, an die Geschwindigkeit des bewegten Maschinenteils angepaßten Druck p_{A} stehenden Gas gespeist wird, und der einen zentral angeordneten Gaseintrittskanal zum Erfassen des Staudrucks P_{R} umschließt, wobei der Gaseintrittskanal an einen Druckverstärker und nachfolgend an eine Druckmeßeinrichtung zur Messung des verstärkten Staudruckes (Signaldruck P_{Y}) angeschlossen ist. An die Druckmeßeinrichtung ist eine Auswerteeinheit angeschlossen, die zum Vergleich des vorgegebenen Druckes p_{A} unter Berücksichtigung des Anfangsabstandes mit dem Signaldruck p_{Y} ausgebildet ist. Die Auswerteeinheit bildet eine dem Verschleiß äquivalente Größe. Die erfindungsgemäße Düse mit der angeschlossenen Druckmeßeinrichtung und der nachgeschalteten Auswerteeinheit bilden zusammen eine zweckmäßige und störunanfällige Meßeinrichtung. Der ringförmige Gasaustrittskanal besitzt einen Durchmesser, der maximal ein Drittel des doppelten Krümmungsradius der angeblasenen Oberfläche beträgt. Der Einsatz einer Ringdüse im Hinblick auf die Bewegung des zu untersuchenden Maschinenteils gewährleistet eine stabile Gasströmung. Die Begrenzung des Durchmessers der Düse hat den Vorteil, daß die Oberfläche weitgehend senkrecht angeblasen wird, und daß die Justierung der Düse in Richtungen senkrecht zur ihrer Achse unkritisch ist.

Auf Grund dieser Anordnung ist gewährleistet, daß die Anströmfläche und damit die zu messenden Verschleißerscheinungen exakt erfaßt werden können.

Nach einer Weiterbildung der Erfindung ist der Gasaustrittskanal über ein Drosselventil an einen Druckgasspeicher angeschlossen.

Nach einer Weiterbildung der Erfindung liegen die Öffnungen des Gasaustrittskanals und die Öffnungen des Gaseintrittskanals in einer Ebene.

Nach einer besonders vorteilhaften Ausgestaltung der Erfindung sind zwei Düsen im Winkel von 90° in einer Ebene radial um die Kolbenstange angeordnet. Die Anordnung von zwei um 90° versetzte Düsen ermöglicht, daß die Verschleißerscheinungen am Umfang eines bewegten Maschinenteiles repräsentativ festgestellt werden können.

Zweckmäßigerweise ist die Düse in einem Abstand a von der aus einem Zylinder oder einer Stoffbuchse herauslaufenden Seite der Kolbenstange angeordnet, wobei der Abstand a etwa dem Durchmesser d der Kolbenstange entspricht.

Ein Ausführungsbeispiel der Erfindung wird im folgenden anhand der Zeichnung näher erläutert. Es zeigen:
- Figur 1: die schematische Darstellung eines bewegten Maschinenteiles mit der erfindungsgemäßen Düse im Schnitt;
- Figur 2: die erfindungsgemäße Düse mit der schematischen Darstellung eines Schaltplanes der Auswertvorrichtung und
- Figur 3: eine Draufsicht auf die Anordnung der um 90° versetzten Düsen.

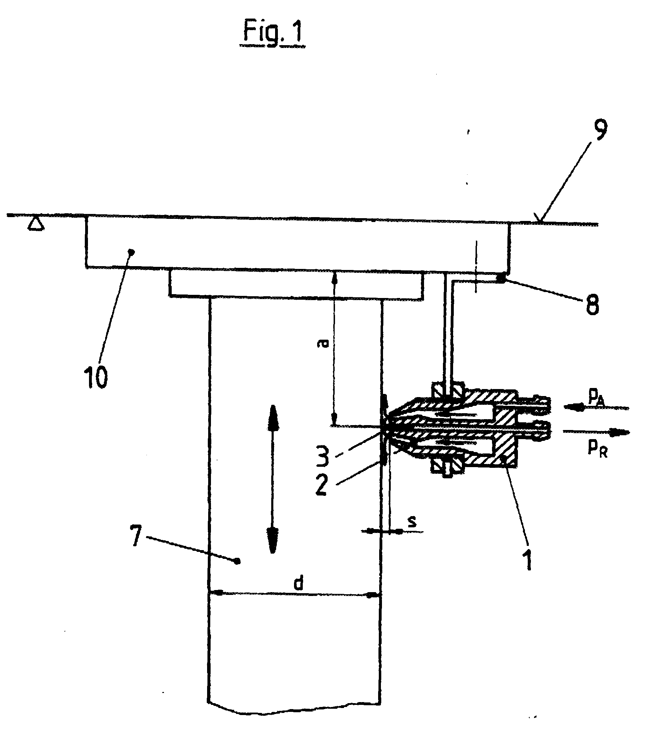

Die in der Figur 1 mit dem Bezugszeichen 1 bezeichnete Düse ist mit einem Abstand s (Spaltdicke) zur schematisch dargestellten Kolbenstange 7 angeordnet. Dabei ist die Düse 1 mit einem Halter 8 am Flansch einer Kolbenstangenstopfbuchse 10 befestigt, die unterhalb eines Zylinders 9 angeordnet ist. Die Düse 1 weist einen ringförmigen Gasaustrittskanal 2 auf, aus dem das Gas mit einem gedrosselten Austrittsdruck p_{A} ausströmt. Das ausströmende Gas trifft dabei auf eine sich bewegende Kolbenstangenoberfläche, wodurch ein Staudruck erzeugt wird. Aufgrund dieses Staudruckes strömt ein Teilstrom des Gases in einen Gaseintrittskanal 3 zurück.

Aufgrund dieser beiden Gasströme läßt sich nun ein Differenzdruck feststellen, dessen Änderung ein Maß für den Verschleiß an der Kolbenstange 7 und/oder an der Kolbenstangenstopfbuchse 10 oder auch an den Kolben- und/oder -Führungsringen oder Tragsatteln darstellt.

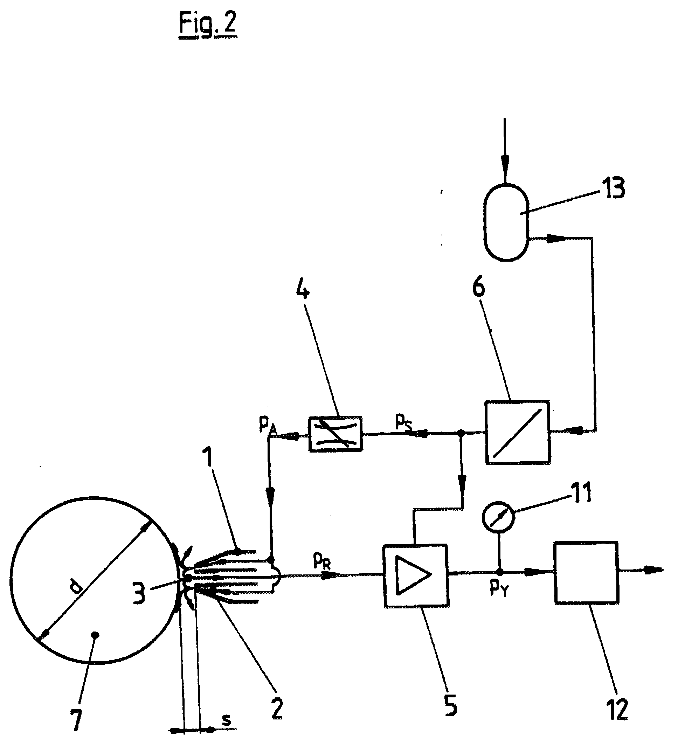

In der Figur 2 ist das Prinzipschaltbild für die Gasdruckerzeugung und die Auswertung des Differenzdrucks dargestellt. Dabei tritt das Gas zunächst von einem Druckgasspeicher 13 in einen Konstantdruckregler 6 ein, bevor es in einem Drosselventil 4 auf einen Ausgangsdruck p_{A} geregelt wird. Das auf den Ausgangsdruck p_{A} geregelte Gas tritt dann in den ringförmigen Gasaustrittskanal 2 ein und trifft in Spalt s auf die Fläche der zu messenden Kolbenstange 7. Der dadurch erzeugte Staudruck läßt einen Teil des ausströmenden Gases durch den Gaseintrittskanal 3 zurückströmen. Dabei ist der Gaseintrittskanal 3 ringförmig um den Gasaustrittskanal 2 angeordnet. Der sich hierbei einstellende Staudruck p_{R} wird in einem Druckverstärker 5 etwa um das hundertfache auf den Signaldruck P_{Y} verstärkt, um für die Druckmeßeinrichtung 11 ein verwertbares Signal zu erhalten. In der Auswerteeinheit 12 wird der Signaldruck P_{Y} in eine dem Verschleiß äquivalente Größe umgewandelt.

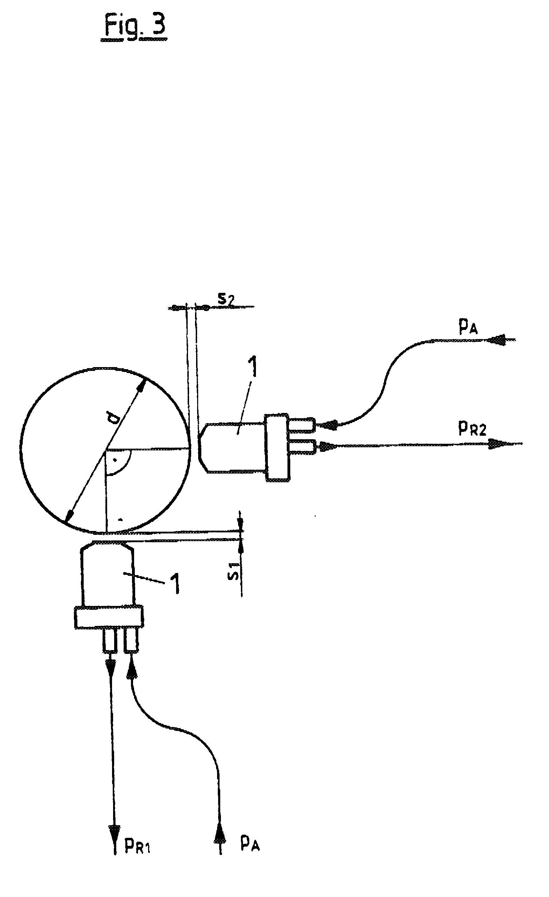

Die Darstellung der Figur 3 zeigt zwei im Winkel von 90° in der Querschnittsebene angeordnete Düsen 1, an denen sich je nach Verschleißzustand und Lage die Abstände s 1 und s 2 einstellen.

### BEZUGSZEICHENLISTE

- 1: Düse
- 2: Gasaustrittskanal
- 3: Gaseintrittskanal
- 4: Drosselventil
- 5: Druckverstärker
- 6: Konstantdruckregler
- 7: Kolbenstange
- 8: Düsenhalter
- 9: Zylinder
- 10: Kolbenstangenstopfbuchse
- 11: Druckmeßeinrichtung
- 12: Auswerteeinheit
- 13: Druckgasspeicher
- a: Düsenabstand zur Zylinderunterkante oder Stopfbuchsflansch
- d: Kolbenstangendurchmesser
- s: Düsenabstand zur Kolbenstange
- P_{A}: Austrittsdruck
- P_{R}: Staudruck
- P_{S}: Systemeinheitsdruck
- P_{Y}: Diagnosesignaldruck

## Patentansprüche

1. Verfahren zur Diagnose des Verschleisses von bewegten Maschinenteilen mit gekrümmter Oberfläche und/oder Lagerelementen der bewegten Maschinenteile von Kurbel-Pleuel-Mechanismen mit Kreuzkopfführung, insbesondere von Kolbenstangen, Kolben- und Kolbenführungsringen, Kolbenstangenabdichtelementen und Tragsatteln bei Hubkolbenverdichtern, dadurch gekennzeichnet,
daß die gekrümmte Oberfläche des bewegten Maschinenteils in einem vorgegebenen Anfangsabstand s mit einem ringförmigen Gasstrom mit vorgegebenem, an die Geschwindigkeit des bewegten Maschinenteils angepaßten Druck p_{A} im wesentlichen senkrecht angeblasen wird,
daß die durch die Stauwirkung an der Oberfläche des bewegten Maschinenteils bewirkte Rückströmung des Gases im Zentrum des ringförmigen Gasstromes erfaßt und der dabei auftretende Staudruck p_{R} kontinuierlich gemessen wird und
daß der Druck p_{A} mit dem gemessenen Staudruck p_{R} unter Berücksichtigung des Anfangsabstandes s fortdauernd verglichen wird und aus dem Vergleich auf den Verschleiß geschlossen wird.

2. Verfahren nach Anspruch 1, dadurch gekennzeichnet, daß die Oberfläche des bewegten Maschinenteils mit einem Überdruck von 0,05 bis 1 bar in einem Abstand s zwischen 0,1 und 3 mm angeblasen wird.

3. Verfahren nach einem der Ansprüche 1 oder 2 dadurch gekennzeichnet, daß der Staudruck P_{R} zum Vergleich mit dem Druck P_{A} auf einen Signaldruck P_{Y} verstärkt wird.

4. Verfahren nach einem der Ansprüche 1 bis 3, dadurch gekennzeichnet, daß die Oberfläche des Maschinenteils dann an mindestens zwei beabstandeten Stellen angeblasen wird, wenn die Lage der Kolbenstangenachse, z.B. durch Schwerkraft, nicht endgültig festgelegt ist.

5. Verfahren nach einem der Ansprüche 1 bis 4, dadurch gekennzeichnet, daß Gas mit einem Systemeinheitsdruck p_{S} von 1,4 bar eingesetzt wird, der anschließend auf den Druck p_{A} gedrosselt wird.

6. Verfahren zur Diagnose des Verschleisses von Maschinenteilen eines Hubkolbenverdichters gemäß einem der Ansprüche 1 bis 5, dadurch gekennzeichnet, daß als Gas das vom Hubkolbenverdichter verdichtete Medium oder Druckluft oder Stickstoff eingesetzt wird.

7. Verfahren nach einem der Ansprüche 1 bis 6, dadurch gekennzeichnet, daß als Gas Stickstoff eingesetzt wird, wobei das nicht zurückströmende Gas gleichzeitig zur Spülung von das bewegte Maschinenteil umgebender Zwischenstücke benutzt wird.

8. Vorrichtung zur Diagnose des Verschleisses von bewegten Maschinenteilen und/oder Lagerelementen der bewegten Maschinenteile von Kurbel-Pleuel-Mechanismen mit Kreuzkopfführung, insbesondere von Kolbenstangen, Kolben- und Kolbenführungsringen, Kolbenstangenabdichtelementen und Tragsatteln bei Hubkolbenverdichtern mit einer Nachweiseinrichtung und mit einem bewegten Maschinenteil mit gekrümmter Oberfläche, dadurch gekennzeichnet, daß
- die Nachweiseinrichtung mindestens eine beabstandet und senkrecht zur Oberfläche des bewegten Maschinenteils (7) angeordnete Düse (1) mit einem ringförmigen Gasaustrittskanal (2) aufweist, der von einem unter vorgegebenem, an die Geschwindigkeit des bewegten Maschinenteils angepaßten Druck p_{A} stehenden Gas gespeist wird und der einen zentral angeordneten Gaseintrittskanal (3) zum Erfassen des Staudrucks P_{R} umschließt, wobei der Durchmesser des ringförmigen Gasaustrittskanals (2) ≤ 1/3 des doppelten Krümmungsradius der gekrümmten Oberfläche des bewegten Maschinenteils ist,
- daß an den Gaseintrittskanal (3) ein Druckverstärker (5) angeschlossen ist, der nachfolgend mit einer Druckmeßeinrichtung (11) zur Messung des verstärkten Staudruckes (Signaldruck P_{Y}) verbunden ist, und
- daß an die Druckmeßeinrichtung (11) eine Auswerteeinheit (12) angeschlossen ist, die nach Vergleich mit dem Druck P_{A} unter Berücksichtigung des Anfangsabstandes eine dem Verschleiß äquivalente Größe bildet.

9. Vorrichtung nach Anspruch 8, dadurch gekennzeichnet, daß der Gasaustrittskanal (2) über ein Drosselventil (4) an einen Druckgasspeicher (13) angeschlossen ist.

10. Vorrichtung nach einem der Ansprüche 8 oder 9, dadurch gekennzeichnet, daß die Öffnung des Gasaustrittskanals (2) und die Öffnung des Gaseintrittskanals (3) in einer Ebene liegen.

11. Vorrichtung zur Diagnose des Verschleißes von Kolbenstangen gemäß einem der Ansprüche 8 bis 10, dadurch gekennzeichnet, daß die Düse (1) in einem Abstand a von der aus einem Zylinder (9) oder einer Stopfbuchse (10) herauslaufenden Seite der Kolbenstange (7) angeordnet ist, wobei der Abstand a etwa dem Durchmesser d der Kolbenstange (7) entspricht.

12. Vorrichtung nach Anspruch 11, dadurch gekennzeichnet, daß zwei Düsen (1) im Winkel von 90° in einer Ebene radial um die Kolbenstange (7) angeordnet sind.

## Claims

1. Method for detecting wear in moving machine parts having a curved surface and/or bearing elements of the moved machine parts of crank-connecting rod-mechanisms with crosshead guide, in particular of piston rods, pistons- and piston guide rings, piston rod sealing elements and supporting saddles and lifting cylinder compressors, characterized in that
the curved surface of the moved machine part in a predetermined initial distance s is blasted essentially normally with a ring-shaped flow of gas with a predetermined pressure p_{A} matched to the velocity of the moved machine part,
the backflow of the gas effected by the ram action at the surface of the moved machine part is sensed within the center of the ring-shaped flow of gas and the ramming pressure p_{R} appearing herewith is continuously measured and
the pressure p_{A} is permanently compared to the measured ramming pressure p_{R} under consideration of the initial distance and from the comparison a conclusion is made with respect to the wear.

2. Method according to claim 1, characterized in that the surface of the moved machine part is blasted with an excess pressure of 0,05 to 1 bar with a distance s between 0,1 and 3 mm.

3. Method according to one of claims 1 or 2, characterized in that the ramming pressure P_{R} for the comparison with the pressure P_{A} is amplified to a signal pressure P_{Y}.

4. Method according to one of claims 1 to 3, characterized in that the surface of the machine part is blasted at two spaced apart spots in the event where the position of the piston rod axis, e.g. by gravity force, is not finally determined.

5. Method according to one of claims 1 to 4, characterized in that gas with a system pressure p_{S} of 1,4 bar is used which subsequently is throttled to the pressure p_{A}.

6. Method for the diagnosis of wear of moved machine parts in a lifting cylinder compressor according to one of claims 1 to 5, characterized in that as gas the medium compressed by the lifting cylinder compressor or pressurized air or nitrogen is used.

7. Method according to one of claims 1 to 6, characterized in that nitrogen is used as gas whereat the gas not flowing back at the same time is used for purging intermediate parts surrounding the moved machine part.

8. Apparatus for the diagnosis of wear of moving machine parts and for bearing elements of the moved machine parts of crank-connecting rod-mechanisms with crosshead guide, in particular of piston rods, piston- and piston guide rings, piston rod sealing elements and supporting saddles of lifting cylinder compressors comprising a detecting device and a moved machine part with a moved surface, characterized in that
- the detecting device comprises at least a nozzle (1) with a ring-shaped gas exit channel (2) being spaced apart and arranged normally to the surface of the moved machine part, with said channel being fed by a gas having a predetermined pressure p_{A} which is matched to the velocity of the moved machine part and surrounding a central arranged as entrance channel (3) for sensing the ramming pressure P_{R}, whereat the diameter of the ring-shaped gas exit channel (2) is ≤ 1/3 of twice of the curvature radius of the curved surface of the moved machine part,
- a pressure amplifier (5) is connected to the gas entrance channel (3), which subsequently is connected to a pressure measuring device (11) for measuring the amplified ramming pressure (signed pressure P_{y}), and
- an evaluation unit (12) is connected to the pressure measuring device (11), which forms a value equivalent to wear after comparison to the pressure P_{A} under consideration of the initial distance.

9. Apparatus according to claim 8, characterized in that the gas exit channel (2) is connected via a throttle valve (4) to a pressurized gas reservoir (13).

10. Apparatus according to one of claims 8 or 9, characterized in that the opening of the gas exit channel (2) and the opening of the gas entrance channel (3) are arranged in the same plane.

11. Apparatus for the diagnosis of wear of piston rods according to one of claims 8 to 10, characterized in that the nozzle (1) is arranged in a distance a from the side of the piston rod (7) extending from a cylinder (9) or from a gland (10), respectively, whereat the distance a corresponds approximately to the diameter d of the piston rod (7).

12. Apparatus according to claim 11, characterized in that two nozzles (1) are arranged under an angle of 90° within a plane extending radially around the piston rod (7).

## Revendications

1. Méthode pour la détection de l'usure de pièces mécaniques mobiles d'une surface voûtée et/ou d'éléments de palier des pièces mécaniques mobiles de mécanismes vilebrequin-bielle ayant une glissière de crosse de piston, en particulier des bielles, des segments du piston et des gorges de guidage du piston, des éléments d'étanchement de la tige du piston et des chaises dans des compresseurs de piston alternatif,
caractérisée en ce
que, à une distance initiale s pré-définie, la surface voûtée de la pièce mécanique mobile est soufflée principalement à angle droit avec un courant de gaz annulaire ayant une force de pression p_{A} pré-définie et adaptée à la vitesse du pièce mécanique mobile,
que le refluement du gaz au centre du courant de gaz annulaire effectué par l'effet de refoulement à la surface de la pièce mécanique mobile est détecté, et la pression dynamique p_{R} y apparaîssant est mesurée continuellement, et
que, en tenant compte à la distance initiale s, la force de pression p_{A} est comparée pepétuellement avec la pression dynamique p_{R}, et que l'on conclut de la compression à l'usure.

2. Méthode d'après la revendication 1, caractérisée en ce que la surface de la pièce mécanique mobile est soufflée d'une surpression de 0,05 à 1 bar à une distance d'entre 0,1 et 3 mm.

3. Méthode d'après l'une quelconque des revendications 1 ou 2, caractérisée en ce que, pour la comparaison avec la pression p_{A}, la pression dynamique p_{R} est amplifiée à une pression de signalisation p_{Y}.

4. Méthode d'après l'une quelconque des revendications 1 à 3, caractérisée en ce que la surface de la pièce mécanique mobile est soufflée au moins à deux emplacements distants dans le cas, où la position de l'axe de la bielle n'est pas fixée définitivement, par exemple par la gravité.

5. Méthode d'après l'une quelconque des revendications 1 à 4, caractérisée en ce que le gaz est utilisé d'une pression de système unitaire p_{S} de 1,4 bar, qui est réduite ensuite à la pression p_{A}.

6. Méthode pour la détection de l'usure de pièces mécaniques d'un compresseur à piston d'après l'une quelconque des revendications 1 à 5, caractérisée en ce que, en tant que gaz, on utilise la matière comprimée par le compresseur de piston ou de l'air comprimé ou de l'azote.

7. Méthode d'après l'une quelconque des revendications 1 à 6, caractérisée en ce que, en tant que gaz, on employe de l'azote en utilisant à la fois le gaz non-refluant pour le balayage de pièces intermédiaires entourant la pièce mécanique mobile.

8. Dispositif pour la détection de l'usure de pièces mécaniques mobiles et/ou d'éléments de palier des pièces mécaniques mobiles de mécanismes vilebrequin-bielle ayant une glissière de crosse de piston, en particulier de bielles, des segments du piston et des gorges de guidage du piston, des éléments d'étanchement de la tige du piston et des chaises dans des compresseurs de piston alternatif, ledit dispositif comportant une installation à détection et une pièce mécanique mobile d'une surface voûtée,
caractérisé en ce
que l'installation de détection montre au moins un gicleur (1) distant et disposé à angle droit relativement à la surface de la pièce mécanique mobile (7) et ayant un conduit d'échappement du gaz (2) annulaire qui est alimenté d'un gaz sousmis à la pression p_{A} donnée et adaptée à la vitesse de la pièce mécanique mobile et qui enceint un conduit d'entrée du gaz (3) disposé au centre pour détecter la pression dynamique p_{R}, le diamètre dudit conduit d'échappement du gaz (2) s'élevant à ≤ 1/3 du double rayon de la courbure de la surface voûtée de la pièce mécanique mobile,
qu'un multiplicateur de pression (5) est branché sur un conduit d'entrée du gaz (3) qui est relié à un manomètre (11) pour mesurer la pression dynamique amplifiée (pression de signalisation p_{Y}), et
qu'au manomètre (11), une unité d'évaluation (12) est raccordée qui, après la comparaison avec la pression p_{A}, établit une valeur équivalente à l'usure en tenant compte à la distance initiale.

9. Dispositif d'après la revendication 8, caractérisé en ce que le conduit d'échappement du gaz (2) est branché sur un réservoir à gaz comprimé (13) par une vanne d'étranglement (4).

10. Dispositif d'après l'une quelconque des revendications 8 ou 9, caractérisé en ce que l'ouverture du conduit d'échappement du gaz (2) et l'ouverture du conduit d'entrée du gaz (3) sont en disposition coplanaire.

11. Dispositif pour la détection de l'usure de bielles d'après l'une quelconque des revendications 8 à 10, caractérisée en ce que le gicleur (1) est disposé d'une distance a du côté de la bielle (7) sortant d'un cylindre (9) ou d'un presse-étoupe (10), la distance a correspondant environ au diamètre de la bielle (7).

12. Dispositif d'après la revendication 11, caractérisé en ce que deux gicleurs (1) sont arrangés à angle droit et en disposition coplanaire et radiale relativement à la bielle (7).
